# EUROPÄISCHE PATENTSCHRIFT

(11) **EP 3 889 517 B1**
(45) Veröffentlichungstag und Bekanntmachung des Hinweises auf die Patenterteilung: **15.05.2024**
(21) Anmeldenummer: 21158104.6
(22) Anmeldetag: 19.02.2021
(51) Int. Cl.: F24H 8/00, F23J 13/00, F23J 13/04

(54) **KONDENSAT-RÜCKFÜHRUNGSVORRICHTUNG**
CONDENSATE RETURN APPARATUS
DISPOSITIF DE RENVOI DE CONDENSAT

(30) Priorität: 31.03.2020 DE 202020101713 U
(43) Veröffentlichungstag der Anmeldung: 06.10.2021
(73) Patentinhaber: Centrotherm Systemtechnik GmbH, 59929 Brilon (DE)
(72) Erfinder: IMÖHL, Markus, 34431 Marsberg (DE)
(74) Vertreter: Zenz Patentanwälte Partnerschaft mbB

(56) Entgegenhaltungen:
- CN-A- 105 737 179
- CN-Y- 2 568 981
- DE-A1- 3 442 990
- DE-A1- 10 247 834
- DE-A1-102012 112 852
- DE-U1- 29 705 212
- DE-U1- 29 807 361
- NL-A- 8 701 257

## Beschreibung

Die Erfindung richtet sich auf eine Kondensat-Rückführungsvorrichtung, aufweisend einen Rohrkörper, welcher länglich und hohl ausgebildet ist und welcher ein erstes offenes Längsende und ein zweites offenes Längsende aufweist, und einen Anschlusskanal.

Bei im kondensierenden Betrieb arbeitenden Brennwertgeräten entsteht innerhalb des Brennwertgerätes Kondensat, das gesammelt und unterhalb des Brennwertgerätes über eine mit einer Abwasserleitung verbundene Kondensatleitung abgeführt wird. Das Abgas des Brennwertgerätes wird dabei über eine zusätzliche Abgasleitung an ein kaminrohrartiges Abgassystem abgeführt, wobei sich das kaminrohrartige Abgassystem bei einem Mehrfamilienhaus senkrecht durch das gesamte Haus erstreckt, so dass die an den Brennwertgeräten auf unterschiedlichen Etagen angeschlossenen Abgasleitungen mit dem senkrecht verlaufenden Abgassystem verbunden werden und darüber das Abgas des jeweiligen Brennwertgerätes in das Abgassystem abgeführt werden. Dabei bereitet die Ableitung des im Brennwertgerätes entstehenden Kondensats Probleme, wenn im Aufstellungsraum bzw. in der Nähe des Brennwertgerätes keine Abwasserleitung installiert ist. Dies ist bei bestehenden Gebäuden zum Beispiel bei einem Austausch von konventionellen Heizgeräten durch Brennwertgeräte sehr oft der Fall. Das Verlegen einer Kondensatleitung zu einer Abwasserleitung ist bei bestehenden Geräten vor allem bei bewohnten Wohnungen mit einem sehr hohen und häufig nicht zu vertretenden Aufwand verbunden. Daher besteht meist der Wunsch, das am Brennwertgerät anfallende Kondensat über das kaminrohrartige Abgassystem abzuführen, da das zentral durch das Gebäude verlaufende Abgassystem immer in der Nähe des Brennwertgerätes angeordnet ist. Es ist bekannt, dass die Brennwertgeräte auf unterschiedlichen Etagen über eine Kondensatleitung an das Abgassystem angeschlossen sind, so dass das an den Brennwertgeräten anfallende Kondensat in das Abgassystem zurückgeführt wird, wo es in dem Abgassystem nach unten fließt und dort gesammelt, gegebenenfalls neutralisiert und dann abgeführt wird. Somit dient der senkrecht verlaufende Teil des Abgassystems gleichzeitig als Abfluss für anfallendes Kondensat der einzelnen Brennwertgeräte der verschiedenen Etagen des Gebäudes. Aus der DE 102 47 834 A1 ist es bekannt, dass die Rohrabschnitte des Abgassystems unter anderem ein Kondensat-Anschluss-Stück besitzen, an welches eine jeweilige Kondensatleitung eines Brennwertgerätes angeschlossen ist.

Dabei dient die eingangs beschriebene Kondensat-Rückführungsvorrichtung der vorliegenden Erfindung auch der Rückführung von Kondensat in ein Abgassystem, so dass die erfindungsgemäße Kondensat-Rückführungsvorrichtung hinsichtlich des Zwecks mit dem zuvor beschriebenen Kondensat-Anschluss-Stück vergleichbar ist. Denn die Kondensat-Rückführungsvorrichtung der vorliegenden Erfindung stellt ebenfalls einen Rohrabschnitt eines Abgassystems dar. Von Nachteil bei der bekannten Anordnung, bei welcher das Kondensat eines Brennwertgerätes über eine Kondensatleitung und das Kondensat-Anschluss-Stück in das Abgassystem abgeführt wird, ist es, dass das Abgassystem meist unter Überdruck steht und somit die Gefahr besteht, dass Abgase über die Kondensatleitung aus dem Abgassystem in den Aufstellraum des Brennwertgerätes gelangen können. Folglich würden durch die Kondensatleitung von dem Brennwertgerät an das Abgassystem alle Kondensatleitungen zu einem Bauteil des Abgassystems zählen. Damit bestünde ein Problem darin, dass Materialien und deren Verwendung für Abgassysteme reglementiert sind und eine übliche vom Brennwertgerät zum Abgassystem führende Kondensatleitung diese Reglementierungen nicht erfüllt. Von größerer Bedeutung ist jedoch, dass durch einen direkten Anschluss einer solchen Kondensatleitung an das Abgassystem eine Gefahr für Leib und Leben besteht, da Abgas aus dem Abgassystem über die Kondensatleitung in den Aufstellungsraum des Brennwertgerätes gelangen kann, was aber auszuschließen ist.

Aus der DE 298 07 361 U1 ist ein länglich und hohl ausgebildetes Rohr mit einem ersten offenen Längsende und einem zweiten offenen Längsende bekannt. Eine Kondensatfalle ist innenseitig in dem Rohr angeordnet und weist eine Bodenwandung und eine Auffangöffnung auf. Ferner ist ein Kondensatablauf vorgesehen, welcher außenseitig des Rohrs angeordnet ist. Die Kondensatfalle und der Kondensatablauf erstrecken sich in eine Längsrichtung des Rohrs. Damit offenbart die DE 298 07 361 U1 die Merkmale des Oberbegriffs des Anspruchs 1.

Ferner ist aus der CN 2 568 981 Y eine Kondensat-Abführung für einen Schornstein mit einem zweiteiligen Rohr bekannt. An dem unteren Rohr ist eine Ringnut ausgebildet, die innenseitig des Rohres angeordnet ist und eine Bodenwandung aufweist. Außerhalb des Rohres ist ein Anschlusskanal angeordnet, welcher über einen Verbindungskanal mit der Ringnut über einen Durchlass verbunden ist. Der Boden des Verbindungskanals und die Bodenwandung der Ringnut sind an einer identischen Position in Längsrichtung des Rohres angeordnet.

Der Erfindung liegt die Aufgabe zugrunde eine Lösung zu schaffen, die auf konstruktiv einfache Weise und kostengünstig eine verbesserte Kondensat-Rückführungsvorrichtung bereitstellt, welche die vorstehend genannten Nachteile und Gefahren ausschließt.

Diese Aufgabe wird erfindungsgemäß gelöst durch eine Kondensat-Rückführungsvorrichtung mit den Merkmalen gemäß dem Anspruch 1.

Die erfindungsgemäße Kondensat-Rückführungsvorrichtung weist einen Rohrkörper, welcher länglich und hohl ausgebildet ist und welcher ein erstes offenes Längsende und ein zweites offenes Längsende aufweist, einen Kondensat-Auffangkanal und einen Anschlusskanal auf. Dabei erstrecken sich der Kondensat-Auffangkanal und der Anschlusskanal in eine Längsrichtung des Rohrkörpers, wobei der Kondensat-Auffangkanal innenseitig des Rohrkörpers angeordnet ist und mit einer Bodenwandung und einer Auffangöffnung ausgebildet ist. Der Anschlusskanal ist außenseitig des Rohrkörpers angeordnet und mit einem Boden und einer Anschlussöffnung ausgebildet. Die Bodenwandung des Kondensat-Auffangkanals und der Boden des Anschlusskanals sind an einer identischen Position in Längsrichtung des Rohrkörpers angeordnet, wobei der Kondensat-Auffangkanal und der Anschlusskanal über einen Durchlass miteinander verbunden sind. Der Rohrkörper weist eine seitliche Öffnung auf, die von einem Deckel verschlossen ist, wobei der Kondensat-Auffangkanal, der Anschlusskanal und der Durchlass an dem Deckel ausgebildet sind. Der Deckel bildet dabei eine Teilwandung des Rohrkörpers aus, wobei die Teilwandung zwischen dem Kondensat-Auffangkanal und dem Anschlusskanal angeordnet ist. Die Teilwandung bildet ferner einen Wandabschnitt des Kondensat-Auffangkanals.

Vorteilhafte und zweckmäßige Ausgestaltungen und Weiterbildungen der Erfindung ergeben sich aus den Unteransprüchen.

Durch die Erfindung wird eine Kondensat-Rückführungsvorrichtung zur Verfügung gestellt, welche sich durch eine einfache Konstruktion auszeichnet. Dadurch, dass der Kondensat-Auffangkanal und der Anschlusskanal über einen Durchlass miteinander verbunden sind, bildet sich innerhalb des Kondensat-Auffangkanals und des Anschlusskanals eine gemeinsame Wassersäule durch das darin befindliche Kondensat, wobei die von dem Kondensat gebildete Wassersäule mit einem Geruchsverschluss vergleichbar ist. Die Wassersäule bildet dabei ferner einen Gegendruck zu dem Überdruck aus, der an der Auffang-Öffnung des Kondensat-Auffangkanals herrscht, wohingegen die Anschlussöffnung des Anschlusskanals mit einer zu einem Brennwertgerät führenden Kondensatleitung verbunden ist. Durch den anteilig nach innen ragenden Kondensat-Auffangkanal wird die Wassersäule der Kondensat-Rückführungsvorrichtung immer aufrechterhalten, wobei bei zeitweisem Nichtbetrieb des angeschlossenen Brennwertgerätes der Kondensat-Auffangkanal Kondensat, welches innerhalb des Abgassystems nach unten strömt, teilweise aufnimmt und dadurch mit Kondensat gespeist bzw. gefüllt wird. Durch die erfindungsgemäße Kondensat-Rückführungsvorrichtung ist die Abgasdichtheit und eine klare Trennung von Abgasleitung und Kondensat-Führung sichergestellt. Durch die Ausbildung des Deckels als Teilwandung des Rohrkörpers erfährt der Deckel eine vorteilhafte Doppelfunktion. Ferner kann dadurch, dass die Teilwandung einen Wandabschnitt des Kondensat-Auffangkanals bildet, Material für die Ausbildung des Deckels und des Kondensat-Auffangkanals eingespart werden.

Die Erfindung sieht in weiterer Ausgestaltung vor, dass die Teilwandung einen Wandabschnitt des Anschlusskanals bildet. Auf diese Weise kann auch Material für den Deckel und den Anschlusskanal eingespart werden.

Materialsparend ist es in weiterer Ausgestaltung der Erfindung auch, wenn ein Wandabschnitt des Kondensat-Auffangkanals einen Abschnitt der Teilwandung bildet und/oder wobei ein Wandabschnitt des Anschlusskanals einen Abschnitt der Teilwandung bildet.

Damit der Kondensat-Auffangkanal keine Blockade innerhalb des Rohrkörpers für das nach unten fließende Kondensat darstellt und dennoch genügend Kondensat für seine gewünschte Wassersäule aufnimmt, sieht die Erfindung in weiterer Ausgestaltung vor, dass sich der Kondensat-Auffangkanal im Querschnitt betrachtet entlang eines Umfangsabschnitts des Rohrkörpers erstreckt, wobei sich der Umfangsabschnitt höchstens entlang eines Zwölftels vom Gesamtinnenumfang des Rohrkörpers erstreckt. Alternativ kann sich der Umfangsabschnitt auch höchstens entlang eines Achtels vom Gesamtinnenumfang des Rohrkörpers erstrecken. Im Falle eines im Querschnitt kreisrunden Rohrkörpers entspricht der Umfangsabschnitt einem Kreisabschnitt, entlang welchem sich der Kondensat-Auffangkanal erstreckt.

In Ausgestaltung der Erfindung ist ferner vorgesehen, dass der Kondensat-Auffangkanal eine Becherwandung aufweist, welche sich mit einer Länge in das Innere des Rohrkörpers hinein erstreckt, welche höchstens ein Sechstel einer Innenlänge des Rohrkörpers beträgt. Der Kondensat-Auffangkanal ragt somit höchstens zu einem Sechstel der Innenlänge des Rohrkörpers von der Wandung des Rohrkörpers in das Innere des Rohrkörpers hinein, wobei bei einem im Querschnitt kreisförmigen Rohrkörper die Innenlänge der Durchmesser des kreisförmigen Rohrkörpers ist. Gemäß einer alternativen Ausgestaltung kann sich die Becherwandung mit einer Länge in das Innere des Rohrkörpers hinein erstrecken, welche höchstens ein Viertel einer Innenlänge des Rohrkörpers beträgt.

Der Kondensat-Auffangkanal wird üblicherweise von Kondensat, welches oberhalb des Rohrkörpers dem Abgassystem zugeführt wird, gespeist, so dass immer eine Wassersäule in dem Kondensat-Auffangkanal und dem mit dem Kondensat-Auffangkanal bodenseitig verbundenen Anschlusskanal vorhanden ist. Dabei weist der Kondensat-Auffangkanal eine Querschnittsfläche auf, die kleiner ist als eine Querschnittsfläche des Anschlusskanals.

Konstruktiv besonders günstig ist es, wenn in Ausgestaltung der Erfindung sich der Kondensat-Auffangkanal und der Anschlusskanal ausgehend von der identischen Längsposition aus in Richtung des ersten offenen Längsendes des Rohrkörpers erstrecken.

In weiterer Ausgestaltung der Erfindung ist vorgesehen, dass sich der Kondensat-Auffangkanal und der Anschlusskanal unter einem spitzen Winkel zueinander erstrecken. Dabei kann der spitze Winkel in einem Bereich zwischen 2° und 20° liegen, wodurch der Anschlusskanal leicht geneigt zum Rohrkörper verlaufend ausgebildet ist, was den Anschluss einer von einem Brennwertgerät stammenden Kondensatleitung erleichtert. Selbstverständlich ist auch eine Ausgestaltung denkbar, bei welcher der Kondensat-Auffangkanal und der Anschlusskanal parallel zueinander verlaufend ausgebildet sind.

Die Erfindung sieht für eine sichere Abführung des Kondensats in das Innere des Rohrkörpers in weiterer Ausgestaltung vor, dass die Anschlussöffnung zwischen dem ersten offenen Längsende und der Auffangöffnung angeordnet ist. Auf diese Weise wird durch die Wassersäule des in dem Kondensat-Auffangkanal und dem Anschlusskanal befindlichen Kondensats eine Art Geruchsverschluss gebildet. Dadurch, dass die Auffangöffnung "unterhalb" der Anschlussöffnung liegend angeordnet ist, ist sichergestellt, dass angesammeltes Kondensat immer über die Auffangöffnung in den Rohrkörper abfließt, sollte der Auffangkanal vollständig mit Kondensat gefüllt sein.

Es ist in einer alternativen Ausgestaltung ferner vorgesehen, dass die Anschlussöffnung und die Auffangöffnung an einer gleichen Längsposition des Rohrkörpers angeordnet sind, so dass auch hierbei sichergestellt ist, dass das Kondensat über den Kondensat-Auffangkanal in das Innere des Rohrkörpers ablaufen kann.

Da bei einem Mehrfamilienhaus auch eine Wohnung erst zu einem späteren an das Abgassystem angeschlossen werden könnte, sieht die Erfindung schließlich in weiterer Ausgestaltung vor, dass die Anschlussöffnung des Anschlusskanals mit einem Außengewinde zur Anbringung einer Verschlusskappe ausgebildet ist. Durch die Verschlusskappe ist sichergestellt, dass kein Abgas unkontrolliert aus dem Abgassystem entweicht.

Es versteht sich, dass die vorstehend genannten und nachstehenden noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen. Der Rahmen der Erfindung ist nur durch die Ansprüche definiert.

Weitere Einzelheiten, Merkmale und Vorteile des Gegenstandes der Erfindung ergeben sich aus der nachfolgenden Beschreibung im Zusammenhang mit der Zeichnung, in der ein beispielhaftes und bevorzugtes Ausführungsbeispiel der Erfindung dargestellt ist.

In der Zeichnung zeigt:
Figur 1 eine perspektivische Ansicht auf eine erfindungsgemäße Kondensat-Rückführungsvorrichtung,
Figur 2 eine perspektivische Schnittansicht der Kondensat-Rückführungsvorrichtung aus Figur 1,
Figur 3 eine vergrößerte Ansicht eines Ausschnitts aus der Schnittansicht der Figur 2,
Figur 4 eine weitere perspektivische Ansicht auf die erfindungsgemäße Kondensat-Rückführungsvorrichtung mit einem Rohrkörper und einem von einer seitlichen Öffnung des Rohrkörpers demontierten Deckel,
Figur 5 eine perspektivische Ansicht auf den in Figur 4 gezeigten Deckel, welcher einen Kondensat-Auffangkanal und einen Anschlusskanal aufweist,
Figur 6 eine geschnittene Ansicht auf den in Figur 5 gezeigten Deckel und
Figur 7 eine Draufsicht auf die Kondensat-Rückführungsvorrichtung aus Figur 1.

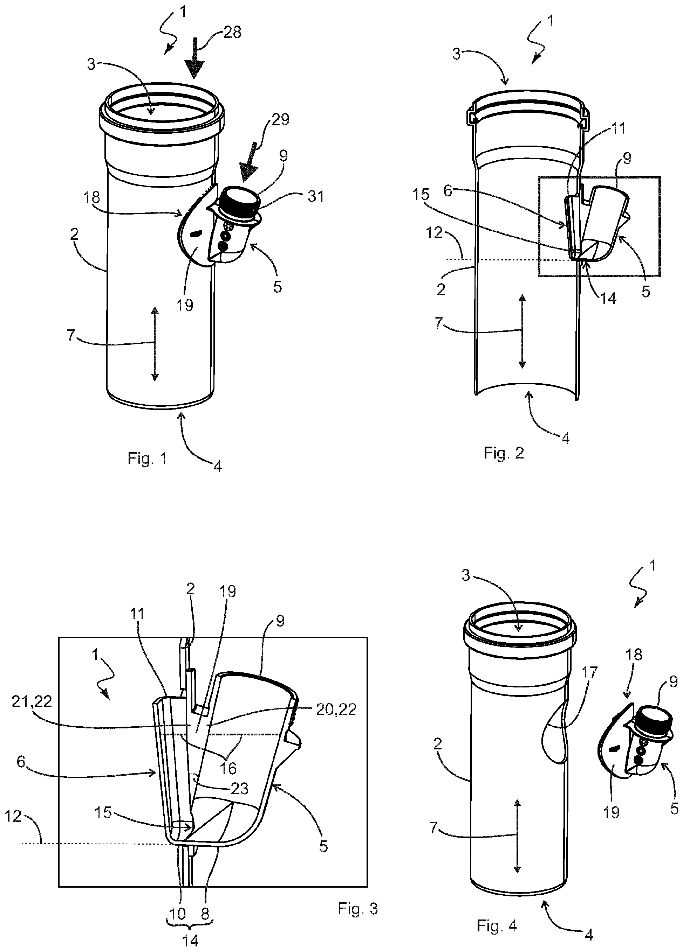

In Figur 1 ist eine erfindungsgemäße Kondensat-Rückführungsvorrichtung 1 in perspektivischer Ansicht dargestellt. Die Kondensat-Rückführungsvorrichtung 1 ist ein Rohrabschnitt eines Abgassystems, wobei unter einem Abgassystem im Sinne der Erfindung ein kaminartiger Rohrstrang zu verstehen ist, welcher sich senkrecht durch ein Mehrfamilienhaus erstreckt und zur Abführung von Abgasen der Brennwertgeräte auf unterschiedlichen Etagen dient. Dabei dient die erfindungsgemäße Kondensat-Rückführungsvorrichtung 1 als eine Art Adapter, um eine Kondensatleitung eines Brennwertgerätes einer Etage zum Abführen von Kondensat des Brennwertgerätes an das Abgassystem anzuschließen. Die in Figur 1 gezeigte Kondensat-Rückführungsvorrichtung 1 weist einen Rohrkörper 2 auf, wobei im Sinne der Erfindung unter den Ausdrücken "Rohr" und "Kanal", wie sie hier unter anderem für das Merkmal des Rohrkörpers und auch in Verbindung mit anderen Merkmalen verwendet werden, ein länglicher Hohlkörper zu verstehen ist, welcher einen kreisrunden, rechteckigen, ovalen oder anderen Querschnitt aufweisen kann. Folglich ist der Rohrkörper 2 der Kondensat-Rückführungsvorrichtung 1 länglich und hohl ausgebildet und weist ein erstes offenes Längsende 3 und ein zweites offenes Längsende 4 auf. Die beiden Längsenden 3 und 4 können muffenartig ausgebildet sein, so dass weitere Rohrabschnitte an den Rohrkörper 2 anschließbar sind. In Figur 1 ist ferner zu erkennen, dass die Kondensat-Rückführungsvorrichtung 1 einen Anschlusskanal 5 aufweist, welcher mit einer Kondensatleitung eines Brennwertgerätes verbindbar ist. Aus der Schnittansicht der Figur 2 ist ferner zu erkennen, dass die Kondensat-Rückführungsvorrichtung 1 ferner einen Kondensat-Auffangkanal 6 aufweist. Wie insbesondere der Figur 2 und der vergrößerten Darstellung in Figur 3 für einen Ausschnitt aus Figur 2 zu entnehmen ist, erstrecken sich der Kondensat-Auffangkanal 6 und der Anschlusskanal 5 in eine Längsrichtung 7 des Rohrkörpers 2. Aus den beiden Schnittansichten der Figuren 2 und 3 geht ferner hervor, dass der Anschlusskanal 5 außenseitig des Rohrkörpers 2 angeordnet ist und mit einem Boden 8 und einer Anschlussöffnung 9 ausgebildet ist, wobei an die Anschlussöffnung 9 eine Kondensatleitung eines Brennwertgerätes anschließbar ist, um anfallendes Kondensat (durch den Pfeil 29 angedeutet) von dem Brennwertgerät zu dem Abgassystem zu führen. Ferner ist aus den Figuren 2 und 3 ersichtlich, dass der Kondensat-Auffangkanal 6 innenseitig des Rohrkörpers 2 angeordnet. Der Kondensat-Auffangkanal 6 ist dabei mit einer Bodenwandung 10 und einer Auffangöffnung 11 ausgebildet, wobei der Kondensat-Auffangkanal 6 insgesamt taschenartig ausgebildet ist. Die Auffangöffnung 11 ist zu dem ersten offenen Ende 3 des Rohrkörpers 2 hin ausgerichtet. Dadurch kann Kondensat, welches von einem Brennwertgerät einer oberhalb betrachteten Etage eines Mehrfamilienhauses über das Abgassystem abgeführt wird, von dem ersten offenen Ende 3 des Rohrkörpers 2 über die Auffangöffnung 11 in den Kondensat-Auffangkanal 6 gelangen, was durchaus zur Aufrechterhaltung oder Herstellung einer Wassersäule innerhalb des Kondensat-Auffangkanals 6 erwünscht ist. Wie die Schnittansichten der Figuren 2 und 3 darüber hinaus zeigen, sind die Bodenwandung 10 des Kondensat-Auffangkanals 6 und der Boden 8 des Anschlusskanals 5 an einer identischen Position 12 in der Längsrichtung 7 des Rohrkörpers 2 angeordnet. Dadurch bilden der Boden 8 und die Bodenwandung 10 eine Gesamtbodenwandung 14 für den Anschlusskanal 5 und den Kondensat-Auffangkanal 6 aus. Zwischen dem Boden 8 und der Bodenwandung 10, also der Gesamtbodenwandung 14, und dem ersten offenen Ende 3 des Rohrkörpers 2 ist ein Durchlass 15 ausgebildet. Genauer gesagt sind der der Kondensat-Auffangkanal 6 und der Anschlusskanal 5 über den Durchlass 15 miteinander verbunden, wobei der Durchlass 15 in Bodennähe des Kondensat-Auffangkanals 6 und des Anschlusskanals 5 ausgebildet sind. Kondensat, welches über die Anschlussöffnung 9 in den Anschlusskanal 5 gelangt, fließt in Richtung des Bodens 5 ab, sammelt sich am Boden und verteilt sich gleichmäßig über den Anschlusskanal 5 und den Kondensat-Auffangkanal 6. Bei einer hinreichenden Menge von angesammeltem Kondensat bildet sich eine Wassersäule 16 innerhalb des Anschlusskanals 5 und des Kondensat-Auffangkanals 6, wie durch die gestrichelte Linie 16 in Figur 3 angedeutet ist. Die Wassersäule ist vergleichbar mit einem Geruchsverschluss und bildet gleichzeitig einen Gegendruck zu dem Überdruck des Abgassystems, so dass eine Gasdichtheit in Richtung der Anschlussöffnung 9 gegeben ist und auf sichere Weise verhindert wird, dass Abgas aus dem Abgassystem über den taschenförmigen Kondensat-Auffangkanal 6 und die Anschlussöffnung 9 in den Aufstellraum des Brennwertgerätes gelangen kann. Durch den abschnittsweise in das Innere des Rohrkörpers 2 ragenden und taschenförmig ausgebildeten Kondensat-Auffangkanal 6 wird immer eine wie vorstehend beschriebene Wassersäule aufrechterhalten, denn bei zeitweisem Nichtbetrieb des Brennwertgerätes, dessen Kondensatleitung an die Anschlussöffnung 9 angeschlossen ist, wird der Kondensat-Auffangkanal 6 von Kondensat gespeist bzw. gefüllt, welches von einem Brennwertgerät einer oberhalb liegenden Etage über das Abgassystem abgeführt wird.

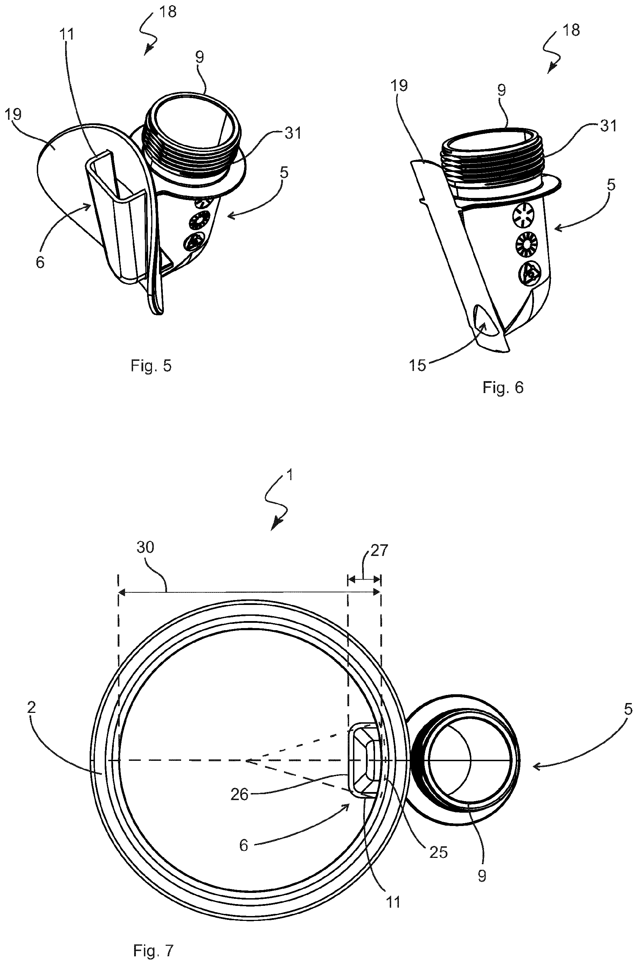

Aus der Figur 4 ist zu erkennen, dass der Rohrkörper 2 eine seitliche Öffnung 17 aufweist. Die Öffnung 17 ist in Figur 1 von einem Deckel 18 verschlossen, welcher lösbar an dem Rohrkörper 2 anbringbar ist. An diesem Deckel 18, welcher eine Teilwandung 19 des Rohrkörpers 2 ausbildet, sind der Kondensat-Auffangkanal 6, der Anschlusskanal 5 und der Durchlass 15 ausgebildet. In Figur 5 ist der Deckel 18 in einer Einzelteildarstellung gezeigt, wobei der Durchlass 15 besonders gut in Figur 6 zu erkennen ist, welche eine Schnittansicht zeigt, bei welcher der Teil des Kondensat-Auffangkanals 6 bis zu der Teilwandung 19 weggeschnitten ist. Wie insbesondere die Figur 5 zeigt, ist die Teilwandung 19 zwischen dem Kondensat-Auffangkanal 6 und dem Anschlusskanal 5 angeordnet. Die zweiteilige Ausführung der Kondensat-Rückführungsvorrichtung 1 mit dem Rohrkörper 2 und dem Deckel 18, an welchem Kondensat-Auffangkanal 6, der Anschlusskanal 5 und der Durchlass 15 ausgebildet sind, ist aus Gründen der Herstellung von Vorteil, aber nicht zwingend. Der Deckel 18 bildet aber nicht nur eine Teilwandung 19 des Rohrkörpers 2. Denn zusätzlich bildet die Teilwandung 19 auch einen Wandabschnitt 20 des Kondensat-Auffangkanals 6 aus. Ebenso bildet die Teilwandung 19 aber auch einen Wandabschnitt 21 des Anschlusskanals aus. Bei anderer Betrachtungsweise kann man auch sagen, dass der Wandabschnitt 20 des Kondensat-Auffangkanals 6 einen Abschnitt 22 der Teilwandung 19 ausbildet, wobei dann auch der Wandabschnitt 21 des Anschlusskanals 5 den Abschnitt 22 der Teilwandung 19 ausbildet.

Wie zum Beispiel der Zusammenschau der Figuren 2 und 3 zu entnehmen ist, erstrecken sich der Kondensat-Auffangkanal 6 und der Anschlusskanal 5 ausgehend von der identischen Längsposition 12 aus in Richtung des ersten offenen Längsendes 3 des Rohrkörpers 2. In dem gezeigten Ausführungsbeispiel erstrecken sich dabei der Kondensat-Auffangkanal 6 und der Anschlusskanal 5 unter einem spitzen Winkel 23 zueinander, wobei es auch denkbar ist, dass sich der Kondensat-Auffangkanal 6 und der Anschlusskanal 5 parallel zueinander erstrecken. Hinsichtlich der erwünschten Wassersäule 16 ist es ferner erforderlich, dass die Anschlussöffnung 9 zwischen dem ersten offenen Längsende 3 und der Auffangöffnung 11 angeordnet ist. Alternativ ist es auch denkbar, dass zu dem vorstehend genannten Zweck die Anschlussöffnung 9 und die Auffangöffnung 11 an einer gleichen Längsposition des Rohrkörpers 2 angeordnet sind, wie es in Figur 3 angedeutet ist, zumal die Kondensatleitung oberhalb der Anschlussöffnung 9 verläuft, so dass ein Abfließen von Kondensat nur über die Auffangöffnung 11 in den Rohrkörper 2 möglich ist, sollte sich einmal zu viel Kondensat innerhalb des Kondensat-Auffangkanals 6 und des Anschlusskanals 5 angesammelt haben. Es ist also sicherzustellen, dass die Anschlussöffnung 9 nicht unterhalb der Auffangöffnung 11 angeordnet ist.

In Figur 7 ist eine Draufsicht auf die erfindungsgemäße Kondensat-Rückführungsvorrichtung 1 gezeigt. Wie der Draufsicht zu entnehmen ist, weist der Kondensat-Auffangkanal 6 eine Querschnittsfläche auf, die kleiner als die Querschnittsfläche des Anschlusskanals 5 ist, wenn man die Anschlussöffnung 9 und die Auffangöffnung 11 betrachtet. Ferner zeigt die Draufsicht der Figur 7, dass sich der Kondensat-Auffangkanal 6 im Querschnitt betrachtet entlang eines Umfangsabschnitts 25 des Rohrkörpers 2 erstreckt. In dem dargestellten Ausführungsbeispiel weist der Rohrkörper 2 einen kreisförmigen Querschnitt auf, so dass sich der Kondensat-Auffangkanal 6 entlang eines Kreisabschnitts erstreckt. Der Umfangsabschnitt 25, entlang dem sich der Kondensat-Auffangkanal 6 erstreckt, beträgt bei dem in den Figuren dargestellten Ausführungsbeispiel höchstens ein Zwölftel des Gesamtinnenumfangs des Rohrkörpers 2. Alternativ wäre es auch denkbar, dass der Umfangsabschnitt 25, entlang dem sich der Kondensat-Auffangkanal 6 erstreckt, höchstens ein Achtel des Gesamtinnenumfangs des Rohrkörpers 2 beträgt. Der taschenförmig oder becherartig ausgebildete Kondensat-Auffangkanal 6 weist ferner eine Becherwandung 26 auf. Die Becherwandung 26 wird zum Teil von der Teilwandung 19 gebildet, wobei sich die übrige Becherwandung in das Innere des Rohrkörpers 2 hinein erstreckt. Dabei erstreckt sich die Becherwandung 26 in der Draufsicht auf den Rohrkörper 2 mit einer Länge 27 in das Innere des Rohrkörpers 2 hinein. Damit der Kondensat-Auffangkanal 6 nur einen Teil des von oberen Etagen des Mehrfamilienhauses stammenden Kondensats (angedeutet durch den Pfeil 28) aufnimmt, beträgt die Länge 26 höchstens ein Sechstel des Innenradius 30 des Rohrkörpers 2, wobei sich die maximale Erstreckung zum Beispiel bei einer viereckigen Querschnittsform des Kondensat-Auffangkanals 6 an einer Kantenlänge als Innenlänge 30 statt des Innenradius 30 orientieren kann. Alternativ kann die Länge 26 auch höchstens ein Viertel des Innenradius 30 des Rohrkörpers 2 für einen Rohrkörper 2 mit beliebiger Nennweite betragen.

Sofern an die Kondensat-Rückführungsvorrichtung 1 kein Brennwertgerät angeschlossen ist, was beispielsweise der Fall bei einem Neubau oder bei einem Austausch eines alten Gerätes gegen ein neuwertiges Brennwertgerät sein kann, so kann die Anschlussöffnung 9 verschlossen werden, um einen Austritt von Abgas zu verhindern. Zum Verschließen kann beispielsweise die Anschlussöffnung 9 des Anschlusskanals 5 mit einem Außengewinde 31 zur Anbringung einer Verschlusskappe ausgebildet sein, wie es in den Figuren gezeigt ist.

### Bezugszeichenliste

- 1: Kondensat-Rückführungsvorrichtung
- 2: Rohrkörper
- 3: erstes offenes Ende
- 4: zweites offenes Ende
- 5: Anschlusskanal
- 6: Kondensat-Auffangkanal
- 7: Längsrichtung
- 8: Boden
- 9: Anschlussöffnung
- 10: Bodenwandung
- 11: Auffangöffnung
- 12: identische Position
- 14: Gesamtbodenwandung
- 15: Durchlass
- 16: Wassersäule
- 17: Öffnung
- 18: Deckel
- 19: Teilwandung
- 20: Wandabschnitt
- 21: Wandabschnitt
- 22: Abschnitt
- 23: spitzer Winkel
- 25: Umfangsabschnitt
- 26: Becherwandung
- 27: Länge
- 28: Kondensat
- 29: Kondensat
- 30: Innenlänge
- 31: Außengewinde

## Patentansprüche

1. Kondensat-Rückführungsvorrichtung (1), aufweisend einen Rohrkörper (2), welcher länglich und hohl ausgebildet ist und welcher ein erstes offenes Längsende (3) und ein zweites offenes Längsende (4) aufweist, einen Kondensat-Auffangkanal (6) und einen Anschlusskanal (5),
wobei sich der Kondensat-Auffangkanal (6) und der Anschlusskanal (5) in eine Längsrichtung (7) des Rohrkörpers (2) erstrecken,
wobei der Kondensat-Auffangkanal (6) innenseitig des Rohrkörpers (2) angeordnet ist und mit einer Bodenwandung (10) und einer Auffangöffnung (11) ausgebildet ist,
wobei der Anschlusskanal (5) außenseitig des Rohrkörpers (2) angeordnet ist und mit einem Boden (8) und einer Anschlussöffnung (9) ausgebildet ist,
wobei die Bodenwandung (10) des Kondensat-Auffangkanals (6) und der Boden (8) des Anschlusskanals (5) an einer identischen Position (12) in der Längsrichtung (7) des Rohrkörpers (2) angeordnet sind,
wobei der Kondensat-Auffangkanal (6) und der Anschlusskanal (5) über einen Durchlass (15) miteinander verbunden sind,
**dadurch gekennzeichnet, dass**
der Rohrkörper (2) eine seitliche Öffnung (17) aufweist, die von einem Deckel (18) verschlossen ist, wobei der Kondensat-Auffangkanal (6), der Anschlusskanal (5) und der Durchlass (15) an dem Deckel (18) ausgebildet sind,
wobei der Deckel (18) eine Teilwandung (19) des Rohrkörpers (2) ausbildet, und wobei die Teilwandung (19) zwischen dem Kondensat-Auffangkanal (6) und dem Anschlusskanal (5) angeordnet ist, und
wobei die Teilwandung (19) einen Wandabschnitt (20) des Kondensat-Auffangkanals (6) bildet.

2. Kondensat-Rückführungsvorrichtung (1) nach Anspruch 1, wobei die Teilwandung (19) einen Wandabschnitt (21) des Anschlusskanals (5) bildet.

3. Kondensat-Rückführungsvorrichtung (1) nach Anspruch 1, wobei ein Wandabschnitt (20) des Kondensat-Auffangkanals (6) einen Abschnitt (22) der Teilwandung (19) bildet und/oder wobei ein Wandabschnitt (21) des Anschlusskanals (5) den/einen Abschnitt (22) der Teilwandung (19) bildet.

4. Kondensat-Rückführungsvorrichtung (1) nach einem der vorhergehenden Ansprüche, wobei sich der Kondensat-Auffangkanal (6) im Querschnitt betrachtet entlang eines Umfangsabschnitts (25) des Rohrkörpers (2) erstreckt, wobei sich der Umfangsabschnitt (25) höchstens entlang eines Zwölftels vom Gesamtinnenumfang des Rohrkörpers (2) erstreckt.

5. Kondensat-Rückführungsvorrichtung (1) nach einem der Ansprüche 1 bis 3, wobei sich der Kondensat-Auffangkanal (6) im Querschnitt betrachtet entlang eines Umfangsabschnitts (25) des Rohrkörpers (2) erstreckt, wobei sich der Umfangsabschnitt (25) höchstens entlang eines Achtels vom Gesamtinnenumfang des Rohrkörpers (2) erstreckt.

6. Kondensat-Rückführungsvorrichtung (1) nach einem der vorhergehenden Ansprüche, wobei der Kondensat-Auffangkanal (6) eine Becherwandung (26) aufweist, welche sich mit einer Länge (27) in das Innere des Rohrkörpers (2) hinein erstreckt, welche höchstens ein Sechstel einer Innenlänge (30) des Rohrkörpers (2) beträgt.

7. Kondensat-Rückführungsvorrichtung (1) nach einem der Ansprüche 1 bis 5, wobei der Kondensat-Auffangkanal (6) eine Becherwandung (26) aufweist, welche sich mit einer Länge (27) in das Innere des Rohrkörpers (2) hinein erstreckt, welche höchstens ein Viertel einer Innenlänge (30) des Rohrkörpers (2) beträgt.

8. Kondensat-Rückführungsvorrichtung (1) nach einem der vorhergehenden Ansprüche, wobei der Kondensat-Auffangkanal (6) eine Querschnittsfläche aufweist, die kleiner ist als eine Querschnittsfläche des Anschlusskanals (5).

9. Kondensat-Rückführungsvorrichtung (1) nach einem der vorhergehenden Ansprüche, wobei sich der Kondensat-Auffangkanal (6) und der Anschlusskanal (5) ausgehend von der identischen Längsposition (12) aus in Richtung des ersten offenen Längsendes (3) des Rohrkörpers (2) erstrecken.

10. Kondensat-Rückführungsvorrichtung (1) nach Anspruch 9, wobei sich der Kondensat-Auffangkanal (6) und der Anschlusskanal (5) unter einem spitzen Winkel (23) zueinander erstrecken.

11. Kondensat-Rückführungsvorrichtung (1) nach Anspruch 9 oder 10, wobei die Anschlussöffnung (9) zwischen dem ersten offenen Längsende (3) und der Auffangöffnung (11) angeordnet ist.

12. Kondensat-Rückführungsvorrichtung (1) nach Anspruch 9 oder 10, wobei die Anschlussöffnung (9) und die Auffangöffnung (11) an einer gleichen Längsposition des Rohrkörpers (2) angeordnet sind.

13. Kondensat-Rückführungsvorrichtung (1) nach einem der vorhergehenden Ansprüche, wobei die Anschlussöffnung (9) des Anschlusskanals (5) mit einem Außengewinde (31) zur Anbringung einer Verschlusskappe ausgebildet ist.

## Claims

1. A condensate return apparatus (1), having a tubular body (2) which is configured in an elongated and hollow manner and which has a first open longitudinal end (3) and a second open longitudinal end (4), a condensate collection channel (6) and a connection channel (5),
wherein the condensate collection channel (6) and the connection channel (5) extend in a longitudinal direction (7) of the tubular body (2),
wherein the condensate collection channel (6) is arranged on the inner side of the tubular body (2) and is configured with a base wall (10) and a collection opening (11),
wherein the connection channel (5) is arranged on the outer side of the tubular body (2) and is configured with a base (8) and with a connection opening (9),
wherein the base wall (10) of the condensate collection channel (6) and the base (8) of the connection channel (5) are arranged at an identical position (12) in the longitudinal direction (7) of the tubular body (2),
wherein the condensate collection channel (6) and the connection channel (5) are connected to one another via a passage (15),
**characterized in that**
the tubular body (2) has a lateral opening (17) which is closed by a cover (18), wherein the condensate collection channel (6), the connection channel (5) and the passage (15) are formed on the cover (18),
wherein the cover (18) forms a partial wall (19) of the tubular body (2), and wherein the partial wall (19) is arranged between the condensate collection channel (6) and the connection channel (5), and
wherein the partial all (19) forms a wall portion (20) of the condensate collection channel (6).

2. The condensate return apparatus (1) according to Claim 1, wherein the partial wall (19) forms a wall portion (21) of the connection channel (5).

3. The condensate return apparatus (1) according to Claim 1, wherein a wall portion (20) of the condensate collection channel (6) forms a portion (22) of the partial wall (19) and/or wherein a wall portion (21) of the connection channel (5) forms the/a portion (22) of the partial wall (19).

4. The condensate return apparatus (1) according to one of the preceding claims, wherein the condensate collection channel (6), viewed in cross-section, extends along a circumferential portion (25) of the tubular body (2), wherein the circumferential portion (25) extends at most along one twelfth of the total inner circumference of the tubular body (2).

5. The condensate return apparatus (1) according to one of Claims 1 to 3, wherein the condensate collection channel (6), viewed in cross-section, extends along a circumferential portion (25) of the tubular body (2), wherein the circumferential portion (25) extends at most along one eighth of the total inner circumference of the tubular body (2).

6. The condensate return apparatus (1) according to one of the preceding claims, wherein the condensate collection channel (6) has a cup wall (26) which extends with a length (27) into the interior of the tubular body (2), which amounts to at most one sixth of an inner length (30) of the tubular body (2).

7. The condensate return apparatus (1) according to one of Claims 1 to 5, wherein the condensate collection channel (6) has a cup wall (26) which extends with a length (27) into the interior of the tubular body (2), which amounts to at most one quarter of an inner length (30) of the tubular body (2).

8. The condensate return apparatus (1) according to one of the preceding claims, wherein the condensate collection channel (6) has a cross-sectional area which is smaller than a cross-sectional area of the connection channel (5).

9. The condensate return apparatus (1) according to one of the preceding claims, wherein the condensate collection channel (6) and the connection channel (5), proceeding from the identical longitudinal position (12), extend in the direction of the first open longitudinal end (3) of the tubular body (2).

10. The condensate return apparatus (1) according to Claim 9, wherein the condensate collection channel (6) and the connection channel (5) extend at an acute angle (23) to one another.

11. The condensate return apparatus (1) according to Claim 9 or 10, wherein the connection opening (9) is arranged between the first open longitudinal end (3) and the collection opening (11).

12. The condensate return apparatus (1) according to Claim 9 or 10, wherein the connection opening (9) and the collection opening (11) are arranged at an identical longitudinal position of the tubular body (2).

13. The condensate return apparatus (1) according to one of the preceding claims, wherein the connection opening (9) of the connection channel (5) is configured with an external thread (31) for the mounting of a closure cap.

## Revendications

1. Dispositif de retour de condensat (1), comportant un corps tubulaire (2), lequel est conçu de forme oblongue et creuse et lequel comporte une première extrémité longitudinale (3) ouverte et une deuxième extrémité longitudinale (4) ouverte, un canal collecteur (6) de condensat et un canal de raccordement (5),
le canal collecteur (6) de condensat et le canal de raccordement (5) s'étendant dans une direction longitudinale (7) du corps tubulaire (2),
le canal collecteur (6) de condensat étant placé du côté interne du corps tubulaire (2) et étant conçu avec une paroi inférieure (10) et un orifice collecteur (11),
le canal de raccordement (5) étant placé du côté externe du corps tubulaire (2) et étant conçu avec un fond inférieur (8) et un orifice de raccordement (9),
la paroi inférieure (10) du canal collecteur (6) de condensat et le fond inférieur (8) du canal de raccordement (5) étant placés dans une position (12) identique dans la direction longitudinale (7) du corps tubulaire (2),
le canal collecteur (6) de condensat et le canal de raccordement (5) étant reliés l'un à l'autre par l'intermédiaire d'un passage (15)
**caractérisé en ce que**
le corps tubulaire (2) comporte un orifice (17) latéral, qui est fermé par un couvercle (18), dans le canal collecteur (6) de condensat étant conçus le canal de raccordement (5) et le passage (15) sur le couvercle (18),
le couvercle (18) constituant une paroi partielle (19) du corps tubulaire (2) et la paroi partielle (19) étant placée entre le canal collecteur (6) de condensat et le canal de raccordement (5) et
la paroi partielle (19) constituant un segment de paroi (20) du canal collecteur (6) de condensat.

2. Dispositif de retour de condensat (1) selon la revendication 1, la paroi partielle (19) constituant un segment de paroi (21) du canal de raccordement (5).

3. Dispositif de retour de condensat (1) selon la revendication 1, un segment de paroi (20) du canal collecteur (6) de condensat constituant un segment (22) de la paroi partielle (19) et / ou un segment de paroi (21) du canal de raccordement (5) constituant le / un segment (22) de la paroi partielle (19).

4. Dispositif de retour de condensat (1) selon l'une quelconque des revendications précédentes, considéré dans la section transversale, le canal collecteur (6) de condensat s'étendant le long d'un segment circonférentiel (25) du corps tubulaire (2), le segment circonférentiel (25) s'étendant au maximum le long d'un douzième de la circonférence intérieure totale du corps tubulaire (2).

5. Dispositif de retour de condensat (1) selon l'une quelconque des revendications 1 à 3, considéré dans la section transversale, le canal collecteur (6) de condensat s'étendant le long d'un segment circonférentiel (25) du corps tubulaire (2), le segment circonférentiel (25) s'étendant au maximum le long d'un huitième de la circonférence intérieure totale du corps tubulaire (2).

6. Dispositif de retour de condensat (1) selon l'une quelconque des revendications précédentes, le canal collecteur (6) de condensat comportant une paroi en cuvette (26), qui s'étend à l'intérieur du corps tubulaire (2) par une longueur (27), laquelle s'élève au maximum à un sixième d'une longueur intérieure (30) du corps tubulaire (2).

7. Dispositif de retour de condensat (1) selon l'une quelconque des revendications 1 à 5, le canal collecteur (6) de condensat comportant une paroi en cuvette (26) qui s'étend à l'intérieur du corps tubulaire (2) par une longueur (27), laquelle s'élève au maximum à un quart d'une longueur intérieure (30) du corps tubulaire (2).

8. Dispositif de retour de condensat (1) selon l'une quelconque des revendications précédentes, le canal collecteur (6) de condensat comportant une surface de section transversale qui est inférieure à une surface de section transversale du canal de raccordement (5).

9. Dispositif de retour de condensat (1) selon l'une quelconque des revendications précédentes, en partant d'une position longitudinale (12) identique, le canal collecteur (6) de condensat et le canal de raccordement (5) s'étendant dans la direction de la première extrémité longitudinale (3) ouverte du corps tubulaire (2).

10. Dispositif de retour de condensat (1) selon la revendication 9, le canal collecteur (6) de condensat et le canal de raccordement (5) s'étendant sous un angle aigu (23) l'un par rapport à l'autre.

11. Dispositif de retour de condensat (1) selon la revendication 9 ou 10, l'orifice de raccordement (9) étant placé entre la première extrémité longitudinale (3) ouverte et l'orifice collecteur (11).

12. Dispositif de retour de condensat (1) selon la revendication 9 ou 10, l'orifice de raccordement (9) et l'orifice collecteur (11) étant placés sur une même position longitudinale du corps tubulaire (2).

13. Dispositif de retour de condensat (1) selon l'une quelconque des revendications précédentes, l'orifice de raccordement (9) du canal de raccordement (5) étant conçu avec un filetage (31) pour le montage d'un capuchon de fermeture.
